# EUROPÄISCHE PATENTANMELDUNG

(11) **EP 0 579 931 A1**
(43) Veröffentlichungstag der Anmeldung: **26.01.1994**
(21) Anmeldenummer: 93108548.4
(22) Anmeldetag: 27.05.1993
(51) Int. Cl.: B23Q 9/00, B27C 9/02

(54) **Anbaugerät für eine Hobelbank**

(30) Priorität: 19.06.1992 DE 9208223 U; 04.12.1992 DE 4240793
(71) Anmelder: Obersteiner, Karl, I-39039 Niederdorf (IT)
(72) Erfinder: Obersteiner, Karl, I-39039 Niederdorf (IT)
(74) Vertreter: Flosdorff, Jürgen, Dr.

(57) **Zusammenfassung**

Das Anbaugerät für eine herkömmliche Hobelbank enthält eine Anlaufschiene (1), eine Festspannschiene (2) und eine Breitenanschlagschiene (3), die sich parallel zueinander in Längsrichtung der Hobelbankarbeitsplatte über deren gesamte Länge erstrecken und die im Bereich des rückwärtigen Endabschnitts der Hobelbankarbeitsplatte verschwenkbar gehalten sind. Hierzu sind zwei rahmenartige Befestigungselemente (8) rechts und links unter der Hobelbankarbeitsplatte angeschraubt, die seitlich überstehende Gelenkeinrichtungen (7) für abgewinkelte Haltearme (4,5,6) der drei Schienen (1,2,3) haben. Die drei Schienen (1,2,3) werden in der Arbeitsposition auf das zu bearbeitende Werkstück bzw. die Hobelbankarbeitsplatte herab verschwenkt und nach Gebrauch entweder um 90o in eine aufrechte, vertikale Ruheposition oder um 270o hinter die Hobelbank verschwenkt, wo sie praktisch keinen Raum wegnehmen. Mit diesem Anbaugerät sind viele Arbeiten an der Hobelbank erheblich vereinfacht. Jede herkömmliche Hobelbank ist mit dem Anbaugerät ausrüstbar.

## Beschreibung

Die Erfindung betrifft ein Anbaugerät, mit dem eine herkömmliche Hobelbank ausgestattet werden kann.

Die DE 33 47 662 C2 offenbart einen Werktisch für eine Handkreissäge, bei der eine Führungsschiene für eine Handkreissäge an einem seitlichen Ende des vorderen Randes des Werktischs schwenkbar angebracht ist. Die Führungsschiene hat einen über das Schwenklager hinausragenden Endabschnitt mit einem Anschlag, an dem die Handkreissäge im nicht-betätigten Zustand anliegt, mit der Folge, daß die Führungsschiene durch das Gewicht der Handkreissäge um einen Winkel von knapp 45o in eine angehobene Ausgangsstellung verschwenkt wird. In dieser angehobenen Stellung der Führungsschiene kann ein zususchneidendes Werkstück auf den Werktisch gelegt werden, woraufhin die Führungsschiene auf das Werkstück verschwenkt wird.

Würde diese bekannte Führungsschienenanordnung auf die offenbarte Weise an einer Hobelbank befestigt, würde dies die Arbeit an der Hobelbank erheblich behindern, da die Führungsschiene infolge ihrer Anbringung am seitlichen Rand der Vorderkante der Hobelbank diesen Bereich blockieren würde. Außerdem kann die Schiene nur eine verhältnismäßig kurze Länge haben, da sie sich anderenfalls entlang ihrer Längsachse durchbiegen würde. Ein noch gravierender Nachteil besteht darin, daß die bekannte Führungsschiene nicht zum exakten Zuschneiden großer Platten geeignet ist, da sie ihre Winkellage in der horizontalen Ebene nicht mit einer im Millimeterbereich liegenden Genauigkeit einhalten kann, da sie nur an einer Stelle, nämlich an dem Schwenklager, gehalten ist.

Der vorliegenden Erfindung liegt die Aufgabe zugrunde, ein Anbaugerät für eine vorzugsweise von Hand- und Heimwerkern zu benutzende Hobelbank anzugeben, mit dessen Hilfe auch große Werkstücke wie Holz- und Spanplatten auf schnelle, bequeme Weise mit großer Genauigkeit zugeschnitten werden können, wobei das Anbaugerät stets einsatzbereit sein und dennoch wenig Platz in Anspruch nehmen soll und insbesondere die übrigen Arbeiten an der Hobelbank nicht behindern soll.

Diese Aufgabe wird erfindungsgemäß durch die im Kennzeichen des Patentanspruchs 1 angegebenen Merkmale gelöst. Vorteilhafte Ausgestaltungen der Erfindung sind in den Unteransprüchen gekennzeichnet.

Das erfindungsgemäße Anbaugerät hat eine in Längsrichtung der Hobelbank verlaufende, sich vorzugsweise über deren gesamte Länge erstreckende Anlaufschiene, die ebenso wie die vorzugsweise ferner angeordnete Festspannschiene und Breitenanschlagschiene mit zwei rechtwinklig angesetzten Haltearmen versehen ist, wodurch die Schienen mit ihren Haltearmen eine starre U-Form bilden. Die Haltearme sind an Gelenkeinrichtungen angelenkt, die beispielsweise durch horizontale Achszapfen gebildet sein können, und sich vorzugsweise an dem rechten und linken hinteren Endabschnitt der Arbeitsplatte der Hobelbank befinden, wobei die drei Schienen wenigstens in eine im wesentlichen vertikale Lage schwenkbar sind.

Die drei Schienen sind von ihren rechtwinklig angesetzten Haltearmen exakt in ihrer Position gehalten, da sie an ihren beiden Endbereichen nach Art eines starren Rahmens abgestützt sind, so daß die drei Schienen ihre Lage in der Arbeitsebene mit absoluter Genauigkeit einhalten, so daß auch große Platten genauestens zugeschnitten werden können.

Da die drei Schienen im rückwärtigen Endbereich der Arbeitsplatte der Hobelbank angelenkt sind und wenigstens in eine vertikale Ruhelage verschwenkbar sind, behindern sie in keiner Weise die übrigen Arbeiten an der Hobelbank. Dennoch sind sie stets einsatzbereit und leicht in die Arbeitsposition zu verschwenken.

Die drei Schienen sind mit ihren Haltearmen vorzugsweise an Befestigungseinrichtungen angelenkt, die ihrerseits an dem rechten und dem linken Endabschnitt der Unterseite der Hobelbankarbeitsplatte befestigt sind.

Die Festspannschiene ist vorzugsweise höhenverstellbar ausgebildet. Sie befindet sich in der abgesenkten Arbeitsstellung von der Arbeitsperson aus gesehen hinter der Anlaufschiene, wo sie auf dem Werkstück aufliegt, um mittels einer seitlichen Höheneinstellung und vorzugsweise einer Exzenter- oder Schraubspanneinrichtung das Werkstück unbeweglich festspannen zu können. Die Festspannschiene verläuft parallel zu der Anlaufschiene und erstreckt sich ebenfalls vorzugsweise über die gesamte Lange der Arbeitsfläche der Hobelbank.

Die Breitenanschlagschiene ist vorzugsweise über einen Spindeltrieb in Breitenrichtung der Hobelbank verstellbar. Diese Schiene dient demnach als Anschlag für das zu bearbeitende Werkstück, wobei vorgesehen ist, daß ihre Position von 30 cm auf 105 cm Breite durch Umlegen dieser Schiene variiert werden kann.

Die drei Schienen, mit deren Hilfe die Bearbeitung eines Werkstücks erheblich schneller vonstatten geht, können einzeln oder gemeinsam entweder in eine um 90o zur Arbeitsfläche der Hobelbank verschwenkte, im wesentlichen senkrechte Stellung angehoben werden, in der sie die übrigen Arbeiten auf der Hobelbank in keiner Weise beeinträchtigen, da sie die Arbeitsfläche nicht verkleinern. Nach einem weiteren Vorschlag der Erfindung können die drei Schienen aber auch nach hinten unter die Arbeitsplatte der Hobelbank abgesenkt werden, also um weitere 180o verschwenkt werden, wodurch sie praktisch unsichtbar hinter der Hobelbank verschwinden. Hierzu können die Schienen pneumatisch oder mittels eines Elektromotors verschwenkbar sein.

Die Befestigungseinrichtung für die drei Schienen enthält vorzugsweise zwei Rahmen, von denen jeweils einer an dem rechten und dem linken Endabschnitt der Unterseite der Hobelbankarbeitsplatte befestigt sein kann, wobei an jedem Rahmen seitlich eine Gelenkeinrichtung übersteht, beispielsweise mit horizontalen Lagerzapfen, an denen die drei Schienen mittels ihrer rechtwinklig angesetzter Haltearme angelenkt sind. Die beiden Rahmen sind zweckmäßigerweise unter der Hobelbankarbeitsplatte angeschraubt, was schnell und einfach zu bewerkstelligen ist. Die anschraubbaren Rahmenelemente sind jeweils mit der bereits oben erwähnten Spindel für die Breitenanschlagschiene, einer Einrichtung zu deren Feineinstellung und vorzugsweise mit einer Befestigung für eine Bohrmaschine ausgerüstet, die als Hilfsmotor eine beschleunigte Verstellung der Breitenanschlagschiene ermöglicht. Außerdem können Längenanschläge auf die Anschraubrahmen aufgesteckt werden.

In vorteilhafter Ausgestaltung der Erfindung wird vorgeschlagen, daß an der Rückseite der Hobelbank außerdem Auflegearme für ein Werkstück an den Befestigungsrahmen angelenkt sind, die in der Ebene der Hobelbankoberfläche ausschwenkbar sind und im auskante der Hobelbankarbeitsfläche rechtwinklige Lage. Auf diese Auflegearme, von denen rechts und links einer oder mehrere angelenkt sein können, kann eine lange Platte aufgelegt werden, die damit ohne Unterstützung durch eine Hilfsperson stabil und sicher zur Bearbeitung gehalten ist.

Die drei Schienen, nämlich die Anlaufschiene, die Festspannschiene und die Breitenanschlagschiene, können durch Seile angehoben werden, die über Aufhängerollen laufen, die beispielsweise an senkrechten Ständern gehalten sein können, die ihrerseits an den Befestigungsrahmen angebracht sind. Dabei können an den freien Enden der Seile Gegengewichte angebracht sein, damit zum Verschwenken der Schienen nur geringe Kräfte aufgebracht werden müssen.

Die Schienen können auch mit Zugfedern beaufschlagt sein, die einen an geeigneter Stelle befestigten Federsitz haben und das Verschwenken in die Ruheposition erleichtern.

Es liegt im Rahmen der Erfindung, daß die Schienen z. B. mittels pneumatischer Kolben-Zylinderanordnungen oder von einem Elektromotor verschwenkt werden, wozu zwischen den Schienen und der Abtriebswelle des Elektromotors ein geeignetes Getriebe angeordnet wird. Die Schienen werden dabei wahlweise einzeln oder gemeinsam in die Arbeitsposition oder die Ruhelage verschwenkt.

An der Vorderseite der Hobelbank kann nach einem weiteren Vorschlag der Erfindung ein höhengleicher Zusatztisch angebracht, vorzugsweise angeschraubt werden, der sich vor der Vorderkante der Hobelbank parallel zu dieser erstreckt. Dieser zuschraubbare Zusatztisch kann abgetrennte Werkstücke aufnehmen und ist zum Einsetzen von Handmaschinen wie Handhobelmaschine, Flachdübelfräser, Bohrmaschine, Handkreissäge, Oberfräse etc. verwendbar. Wenn dieser Zusatztisch nicht gebraucht wird, ist er schnell und einfach abnehmbar.

Mit dem erfindungsgemäßen Zusatzgerät kann jede herkömmliche Hobelbank ohne großen Aufwand ausgerüstet werden. Es ermöglicht ein erheblich schnelleres Arbeiten an einer normalen Hobelbank und nimmt wenig Platz in Anspruch, wobei seine Herstellungskosten zudem verhältnismäßig niedrig sind.

Weitere Merkmale, Vorteile und Einzelheiten der Erfindung ergeben sich aus der nachfolgenden Beschreibung bevorzugter Ausführungsformen der Erfindung sowie anhand der Zeichnungen. Dabei zeigen auf weitgehend schematische Weise:
- Fig. 1: eine Aufsicht auf die drei Schienen, die Befestigungsrahmen und den Zusatztisch, wobei die Hobelbank weggelassen ist;
- Fig. 2: eine Vorderansicht der Anordnung gemäß Fig. 1;
- Fig. 3: eine Aufsicht auf den linken Befestigungsrahmen mit zugehörigen Einrichtungen;
- Fig. 4: eine Aufsicht auf den rechten Befestigungsrahmen mit zugehörigen Einrichtungen;
- Fig. 5: eine Ansicht eines hinteren Auslegearms mit verstellbarer Rolle;
- Fig. 6: eine Ansicht eines vorderen Auslegearms;
- Fig. 7: eine Ansicht eines Fußpedals zur Betätigung der vier Rollen;
- Fig. 8 und 9: Vorderansichten der beiden Befestigungsrahmen;
- Fig. 10 + 11: Rückansichten der beiden Befestigungsrahmenelemente;
- Fig. 12a + 12b: eine Verlängerung für die Anlaufschiene;
- Fig. 13: einen Querschnitt durch die Anlaufschiene mit einer Schiebevorrichtung;
- Fig. 14: eine Vorderansicht der Festspannschiene;
- Fig. 15a + 15b: eine Vorderansicht der Breitenanschlagschiene sowie einen Querschnitt durch diese in zwei Positionen und eine Aufsteckplatte;
- Fig. 16: eine Platte für das Furnierschneiden mit eingelassener Spannmöglichkeit;
- Fig. 17: ein verstellbares Festspannelement zu der Furnierplatte gemäß Fig. 16;
- Fig. 18: eine linke Seitenansicht des Befestigungsrahmenelementes mit eingelegtem Vorderarm und Spindel mit Breitenführungsanschlag;
- Fig. 19: einen Schnitt A-B durch die Darstellung der Figur 18;
- Fig. 20: eine Querschnittsdarstellung, die einen Aufsteckanschlag mit eingelassener verstellbarer Schiene, einen Längenanschlag zur Aufsteckschiene und die seitliche Spindel mit der Führungsschiene des Breitenanschlags zeigt;
- Fig. 21: eine Seitenansicht einer gesamten Hobelbank in Schrägstellung zum Transport durch schmale Türen;
- Fig. 22: eine Seitenansicht eines Transportgerätes für die Hobelbank;
- Fig. 23: ein ausgelegtes Format der Zuschneide- und Formatkreissäge;
- Fig. 24: eine Aufsicht auf eine Spannplatte und ein Hilfsgerät zum Plattenheben und Plattentransport;
- Fig. 25: eine verstellbare Fahrbahn zum Platteneinordnen oder Herausnehmen;
- Fig. 26: ein Transportgerät für Spanplatten zu der Darstellung gemäß Fig. 25;
- Fig. 27: eine Seitenansicht des Hilfsgeräts gemäß Fig. 24 und
- Fig. 28: eine Seitenansicht eines weiteren Hilfsgerätes für eine Hobelbank zum Aufhängen einer Handkreissäge, eines Elektrokabels und eines Absaugschlauchs.

Die Figuren zeigen zahlreiche Einzelheiten des erfindungsgemäßen Anbaugerätes für eine herkömmliche Hobelbank.

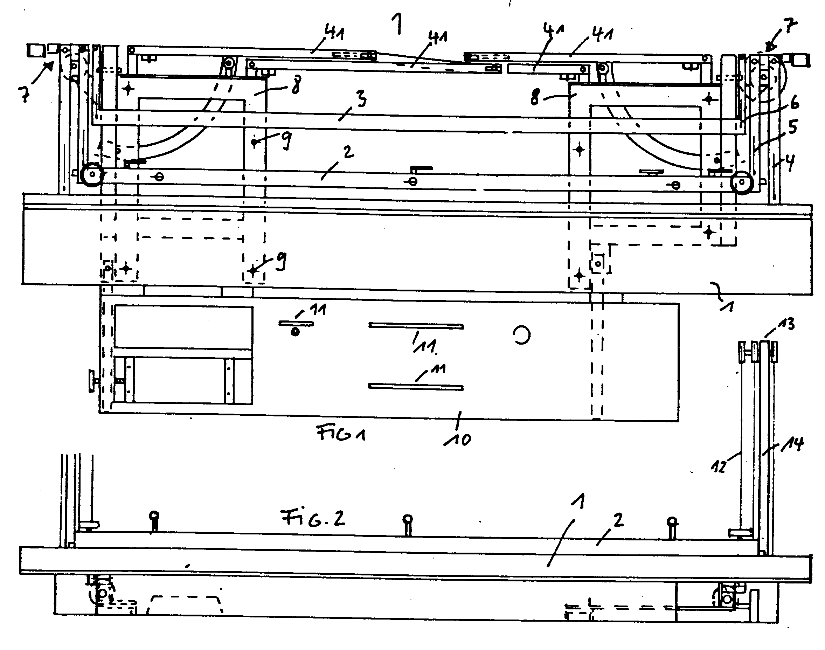

Die Figuren 1 und 2 zeigen eine Anlaufschiene 1, eine Festspannschiene 2 und eine Breitenanschlagschiene 3, die parallel zueinander angeordnet sind und mittels rechtwinklig angesetzter Haltearme 4, 5 und 6 an Gelenkeinrichtungen 7 angelenkt sind, die ihrerseits an Anschraubelementen bzw. Befestigungseinrichtungen 8 angebracht sind, die an der Unterseite der Arbeitsplatte einer Hobelbank angeschraubt werden. Hierzu sind die Anschraubelemente 8 mit vorgebohrten Löchern 9 versehen.

Außerdem ist ein Zusatztisch 10 vorgesehen, der so an der Hobelbank befestigt werden kann, daß er sich vor deren Vorderkante erstreckt. Der Zusatztisch 10 enthält mehrere Schlitze 11, die z.B. von einer Handkreissäge oder einer Stichsäge durchgriffen werden können.

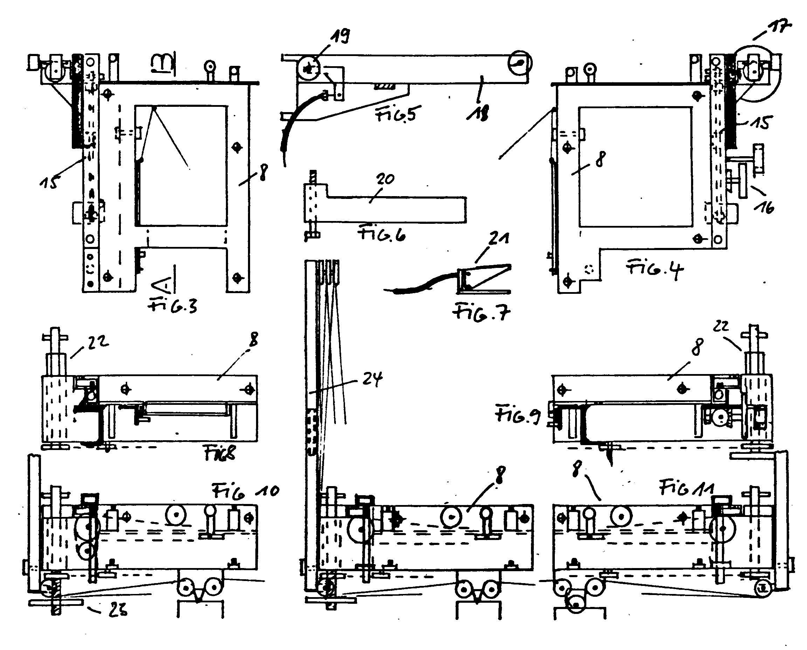

Fig. 2 zeigt, daß bei dieser Ausführungsform die Schienen 1, 2 und 3 mittels Seilen 12 anhebbar sind, die über Rollen 13 verlaufen, die ihrerseits an einem senkrechten Pfosten 14 drehbar gehalten sind. Die Figuren 3 und 4 zeigen die Anschraubelemente 8, einen Spindeltrieb 15 für die Breitenanschlagschiene sowie Einrichtungen 16, zu deren Feineinstellung und zur Befestigung einer Bohrmaschine als Hilfsmotor zur schnelleren Betätigung der Spindel. Hinten ist ein Drehrad 17 für die Höhenverstellung der Anlaufschiene 1 und der Befestigungsschiene 2 vorgesehen.

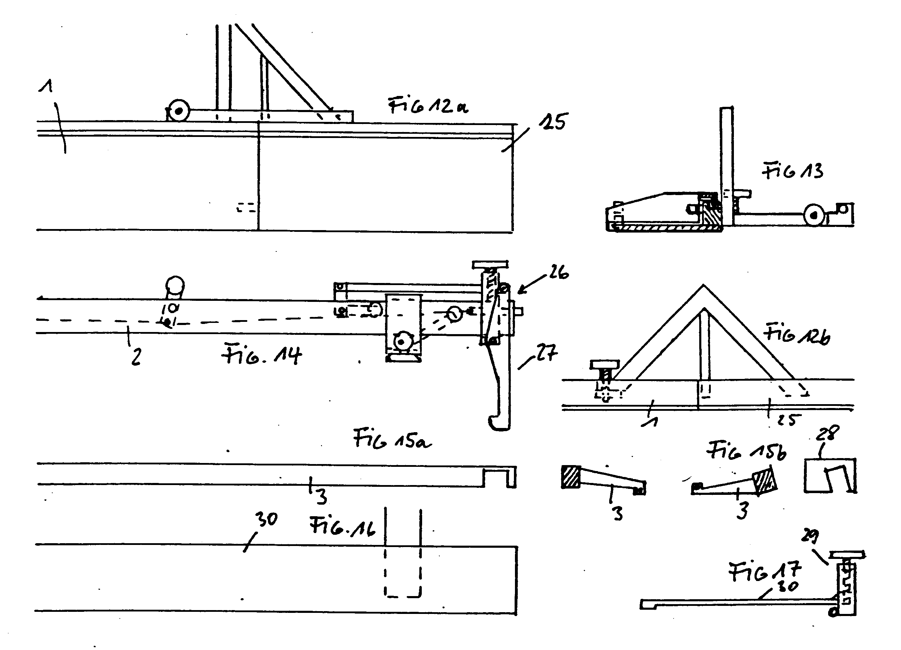

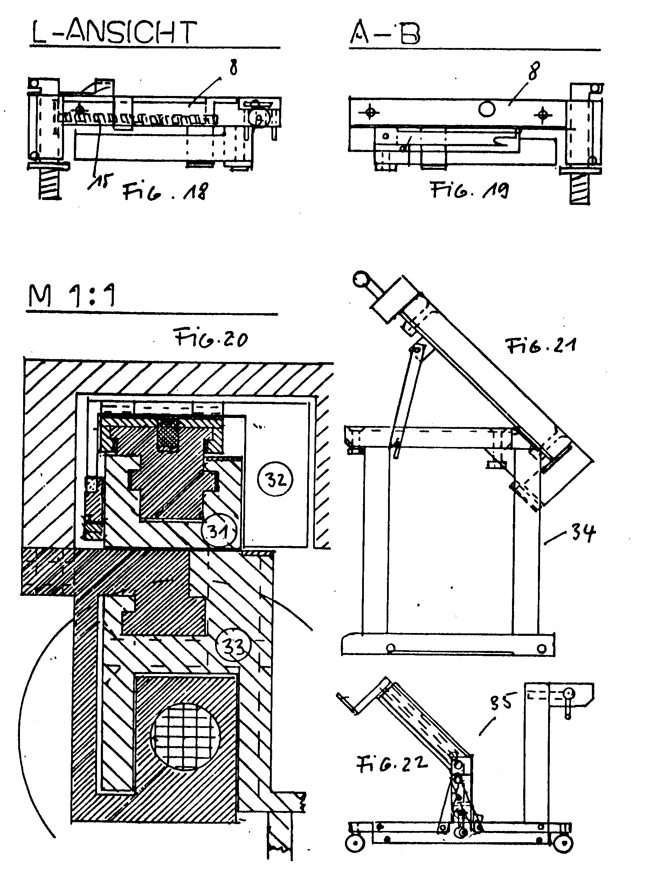

Die Figuren 5 und 6 zeigen einen hinteren Auslegearm 18 mit verstellbarer Rolle 19 und einen vorderen Auslegearm 20. Figur 7 zeigt ein Fußpedal 21 zur Betätigung der vier Rollen.

Wie die Figuren 8 bis 11 zeigen, sind die Anschraubelemente 8 mit Zylindereinrichtungen 22 zur Höhenverstellung und einem Drehrad 23 für die Höhenverstellung und einer abnehmbaren Schiene 24 für das Hebesystem der drei Schienen 1 bis 3 und dafür vorgesehene Ausgleichsgewichte versehen. Die beiden Anschraubelemente 8 sind durch zwei Ketten oder durch Stangen mit einer Zahnradverbindung miteinander verbunden.

Die Figuren 12a und 12b zeigen eine Verlängerung 25 für die Anlaufschiene 1, die im Querschnitt in Figur 13 abgebildet ist. Fig. 14 zeigt eine Vorderansicht der Festspannschiene 2, mit einer Seitenbefestigung mit Exzenter 26 und einem Lösehebel 27.

In den Figuren 15a und 15b ist die Breitenanschlagschiene 3 in einer Ansicht und einem Querschnitt sowie in umgelegter Form zusammen mit einer Aufsteckplatte 28 abgebildet. Die Figuren 16 und 17 zeigen eine Platte für Furnierschneiden und eingelassene Spannmöglichkeiten sowie ein verstellbares Festspannelement 29 zu der Furnierplatte 30.

In Figur 18 ist in einer Ansicht von links das Anschraubelement 8 mit eingelegtem Vorderarm und mit Spindel 15 mit Breitenführungsanschlag dargestellt. Fig. 19 zeigt hiervon einen Schnitt A-B.

Fig. 20 zeigt bei 31 einen Querschnitt des Aufsteckanschlages mit eingelassener verstellbarer Schiene, welche vorne feineinstellbar bis zu 1 cm ist und die an der oberen Fläche Bohrungen in Abständen von 1 cm für den Längenanschlag aufweist. Dieser Anschlag wird hinten eingesteckt und läßt sich heben und auf die Seite bewegen. Vorne sind einstellbare Zapfen (für 90o) vorgesehen, die in die Bohrung passen. Für Gehrungen wird eine anlegbare Schmiege verwendet, mit spitz nach vorn oder umgekehrt für beide Seiten.

Mit 32 ist ein Längenanschlag zur Aufsteckschiene 31 bezeichnet, welcher in die Zentimeterbohrung paßt und ebenfalls von vorne durch ein Stangensystem hochgehoben werden kann. 33 zeigt einen Querschnitt der seitlichen Spindel des linken Anschraubelementes 8.

Fig. 21 zeigt die gsamte Hobelbank 34 in einer Schrägstellung zum Transport durch schmale Türen. Fig. 22 zeigt ein Transportgerät 35 für die Hobelbank 34.

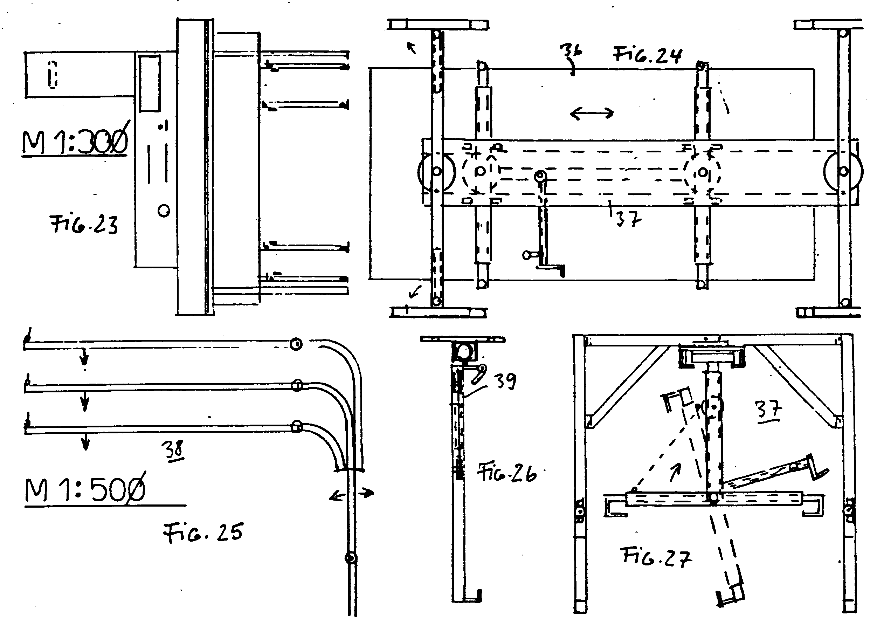

In Fig. 23 ist ein ausgelegtes Format der Zuschneide- und Formatkreissäge abgebildet. Fig. 24 zeigt eine Spanplatte 36 im Format 401 cm x 185 cm sowie ein Hilfsgerät 37 zum Plattenheben und zum Plattentransport, welches in Fig. 27 in einer Seitenansicht abgebildet ist. Fig. 25 zeigt eine verstellbare Fahrbahn 38 zum Platteneinordnen oder Herausnehmen. Hierzu zeigt Fig. 26 ein Transportgerät 39 für Spanplatten.

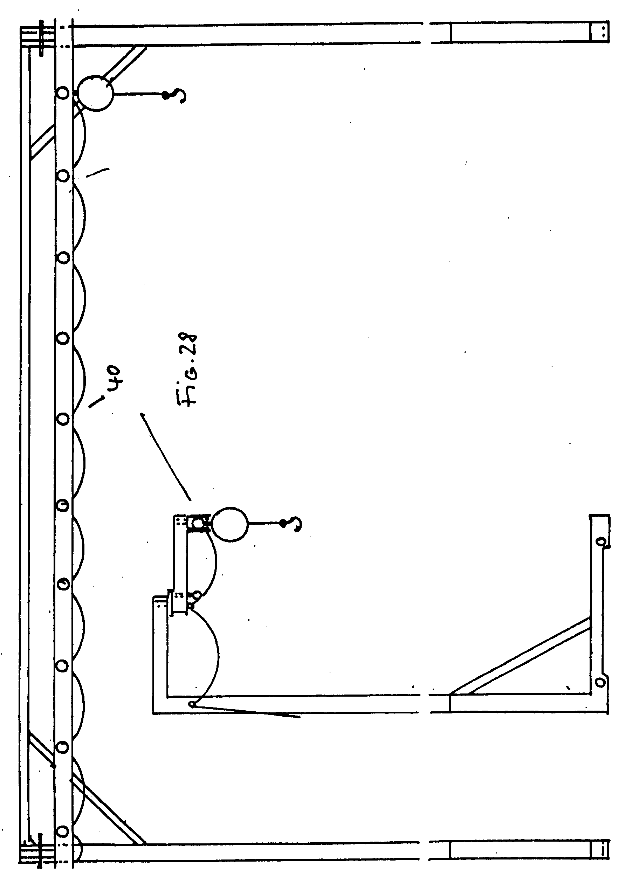

In Fig. 28 ist eine Hilfsgerät 40 für die Hobelbank zum Aufhängen der Handkreissäge, des Elektrokabels und des Absaugschlauches abgebildet.

## Patentansprüche

1. Anbaugerät für eine Hobelbank,
**gekennzeichnet durch**
eine Anlaufschiene (1), die in Längsrichtung der Hobelbank verlaufend angeordnet ist und mittels zweier rechtwinklig angesetzter Haltearme (4), mit denen sie im wesentlichen eine U-Form bildet, an zwei Gelenkeinrichtungen (7) angelenkt ist, die mittels Befestigungseinrichtungen (8) an dem rechten und linken hinteren Endabschnitt der Arbeitsplatte der Hobelbank angebracht sind, derart, daß die Anlaufschiene (1) wenigstens in eine im wesentlichen vertikale Lage schwenkbar ist, wobei die Anlaufschiene (1) aus der angehobenen Position in eine Arbeitsposition absenkbar ist, in der sie auf einem zu bearbeitenden Werkstück aufliegt und ihre zur Führung vorzugsweise einer Handkreissäge vorgesehene Vorderkante mit der Vorderkante der Hobelbank fluchtet oder geringfügig über diese übersteht.

2. Anbaugerät nach Anspruch 1,
ferner gekennzeichnet durch eine Festspannschiene (2), die parallel zu der Anlaufschiene (1) angeordnet ist und ebenfalls mittels zweier rechtwinklig angesetzter Haltearme (5) an Gelenkeinrichtungen (7) angelenkt sind, derart, daß die Festspannschiene (2) wenigstens in eine im wesentlichen vertikale Lage schwenkbar ist, wobei die Festspannschiene (2) höhenverstellbar angeordnet ist und in der Arbeitsstellung hinter der Anlaufschiene (1) auf dem Werkstück aufliegt.

3. Anbaugerät nach Anspruch 1 oder 2,
ferner gekennzeichnet durch eine Breitenanschlagschiene (3), die parallel zu der Anlaufschiene angeordnet ist und ebenfalls mittels zweier rechtwinklig angesetzter Haltearme (6) an zwei Gelenkeinrichtungen (7) angelenkt sind, derart, daß die Breitenanschlagschiene wenigstens in eine im wesentlichen vertikale Lage schwenkbar ist, wobei die Breitenanschlagschiene (3) in Breitenrichtung der Hobelbank verstellbar angeordnet ist.

4. Anbaugerät nach einem der Ansprüche 1 bis 3,
dadurch gekennzeichnet, daß die Schienen (1, 2, 3) aus der Arbeitsposition um etwa 270o in eine Position schwenkbar sind, in der sie hinter die Hobelbank abgesenkt sind.

5. Anbaugerät nach einem der Ansprüche 1 bis 4,
dadurch gekennzeichnet, daß die Schienen (1, 2, 3) mittels über Aufhängerollen (13) laufender Seile (12) anhebbar sind.

6. Anbaugerät nach einem der Ansprüche 1 bis 5,
dadurch gekennzeichnet, daß die Schienen (1, 2, 3) über Zugfedern mit den Befestigungseinrichtungen (8) verbunden sind.

7. Anbaugerät nach einem der Ansprüche 1 bis 4,
dadurch gekennzeichnet, daß die Schienen (1, 2, 3) pneumatisch oder mittels eines Elektromotors verschwenkbar sind.

8. Anbaugerät nach einem der Ansprüche 1 bis 7,
dadurch gekennzeichnet, daß die Festspannschiene (2) mit einer Exzenter- oder Schraubspanneinrichtung versehen ist.

9. Anbaugerät nach einem der Ansprüche 1 bis 8,
dadurch gekennzeichnet, daß die Lage der Breitenanschlagschiene (3) in Breitenrichtung mittels eines Spindeltriebs (15) verstellbar ist.

10. Anbaugerät nach einem der Ansprüche 1 bis 9,
dadurch gekennzeichnet, daß die Befestigungseinrichtung (8) zwei Rahmen aufweist, von denen jeweils einer an dem rechten und dem linken Endabschnitt der Unterseite der Hobelbankarbeitsplatte befestigt ist und eine seitlich über die Hobelbank überstehende Gelenkeinrichtung für die schwenkbaren Schienen (1, 2, 3) aufweist.
